# EUROPÄISCHE PATENTSCHRIFT

(11) **EP 4 257 869 B1**
(45) Veröffentlichungstag und Bekanntmachung des Hinweises auf die Patenterteilung: **07.08.2024**
(21) Anmeldenummer: 22166445.1
(22) Anmeldetag: 04.04.2022
(51) Int. Cl.: F17C 13/12

(54) **BOIL-OFF-MANAGEMENTSYSTEM**
BOIL-OFF MANAGEMENT SYSTEM
SYSTÈME DE GESTION DE L'ÉVAPORATION

(43) Veröffentlichungstag der Anmeldung: 11.10.2023
(73) Patentinhaber: MAGNA Energy Storage Systems GesmbH, 8261 Sinabelkirchen (AT)
(72) Erfinder: BARTLOK, Guido, 8010 Graz (AT); KUPELWIESER, Daniel, 8047 Graz (AT); PODLIPNIG, Andreas, 8311 Markt Hartmannsdorf (AT); WIMMER, Florian, 8334 Riegersburg (AT)
(74) Vertreter: Zangger, Bernd

(56) Entgegenhaltungen:
- DE-A1- 102015 209 621
- DE-A1- 102016 209 170
- DE-A1- 102017 205 642
- DE-A1- 102020 003 894

## Beschreibung

### Gebiet der Erfindung

Die vorliegende Erfindung betrifft ein Boil-Off-Managementsystem (BOMS) für einen Kryotank, einen Kryotank mit einem solchen Boil-Off-Managementsystem und ein Verfahren zum Betreiben eines solchen Boil-Off-Managementsystems.

### Stand der Technik

Durch den unvermeidbaren Wärmeeintrag in einen kryostatischen Behälter, also Druckspeicher für tiefkalte verflüssigte Gase (sog. "Kryotank"), beispielsweise eines mit flüssigem Wasserstoff (H2) betriebenen Brennstoffzellen-Fahrzeugs findet laufend Verdampfung von Wasserstoff statt. Dadurch kann die Temperatur im Tank konstant gehalten werden (sog. "Boil-off"). Um den Druck in dem Tank unter einem bestimmten Schwellwert zu halten, öffnet sich bei ebendiesem ein Ventil (sog. "Boil-off Ventil", BOV), wodurch gasförmiger Wasserstoff in die Umgebung abgegeben wird. Um eine Gefährdung (z.B. Entzündung oder Explosion) durch zu hohe Wasserstoff-Konzentrationen in der Umgebung auszuschließen, kann das abgelassene Gas mit dem Sauerstoff der Umgebungsluft katalytisch umgesetzt werden und reagiert somit zu Wasserdampf. Dieses System bezeichnet man als "Boil-off Management System" (BOMS). Da während des Betriebs eines Wasserstoff-Fahrzeugs stets eine ausreichende Menge gasförmigen Wasserstoffs entnommen wird bzw. für den Betrieb entnommen werden kann, wird das BOMS üblicherweise nur bei längerer Standzeit des Fahrzeugs, nach der sogen. "Dormancy Time", benötigt. Sobald das Boil-off Ventil öffnet - und nur dann -, findet das Ausströmen, Durchmischen mit Luft sowie die katalytische Umsetzung des abgeblasenen Wasserstoffs rein passiv, d.h. ohne Zutun von Menschen oder weiteren elektronischen oder mechanischen Systemen, statt.

Bei widrigen Randbedingungen (Temperatur, Luftfeuchtigkeit, Alterung, ...), die vor allem bei einem Start eines BOMS auftreten können, wird die katalytische Wirkung des Katalysators vermindert. Zudem ist die Reaktionsgeschwindigkeit des Wasserstoff-Sauerstoffgemisches reduziert. Dies kann zu einem hohen H2-Schlupf, also einer hohen Menge an nicht umgesetztem Wasserstoff, der aus dem Abgasrohr ausströmt, führen.

Aus der DE 10 2020 003894 A1 ist ein Druckgasspeicher, insbesondere für ein Kraftfahrzeug, bekannt, mit einem Behälter, welcher zum Speichern eines komprimierten Brennstoffs ausgebildet ist, mit wenigstens einem Druckentlastungsventil, wobei aufgrund eines Öffnens des wenigstens einen Druckentlastungsventils Brennstoff aus dem Behälter in eine Umgebung des Druckgasspeichers abführbar ist, und mit einer Katalysatoreinrichtung, welche dazu ausgebildet ist, eine Oxidationsreaktion von aus dem Behälter stammendem Brennstoff mit Sauerstoff zu katalysieren, wobei der Druckgasspeicher wenigstens ein Piezoelement aufweist, welches durch das Öffnen des wenigstens einen Druckentlastungsventils mit einem Druck beaufschlagbar ist, wobei durch den Druck ein Erzeugen zumindest eines Funkens mittels des wenigstens einen Piezoelements bewirkbar ist.

### Zusammenfassung der Erfindung

Es ist eine Aufgabe der Erfindung, ein Boil-Off-Managementsystem für einen Kryotank anzugeben, das bei widrigen Bedingungen, insbesondere direkt nach dem Start des Boil-Off-Managementsystems, einen Wasserstoff-Schlupf reduziert und einen entsprechenden Kryotank mit einem solchen Boil-Off-Managementsystem anzugeben. Eine Aufgabe der Erfindung ist es auch ein Verfahren zum Betreiben eines solchen Boil-Off-Managementsystems anzugeben, wobei der auftretende Wasserstoff-Schlupf reduziert wird.

Die Lösung der Aufgabe erfolgt durch ein Boil-Off-Managementsystem für einen Kryotank mit den Merkmalen gemäß Anspruch 1.

Das Boil-Off-Managementsystem umfasst eine mit einem Kryotank fluidverbindbare Boil-Off-Leitung mit einem Boil-Off-Ventil, sowie eine Luftzufuhrleitung und eine Mischkammer zur Mischung des durch die Boil-Off-Leitung zuströmenden Mediums, insbesondere Wasserstoff, mit dem durch die Luftzufuhrleitung zuströmenden Medium, insbesondere Luft und/oder Sauerstoff, sowie einen der Mischkammer nachgeschalteten Katalysator und einen dem Katalysator nachgeschalteten Auslass, wobei das Boil-Off-Managementsystem zumindest eine Anreicherungsvorrichtung umfasst, wobei durch die Anreicherungsvorrichtung der Anteil des durch die Boil-Off-Leitung zuströmenden Mediums im Verhältnis zu dem durch die Luftzufuhrleitung zuströmenden Medium, am Katalysator, temporär erhöht werden kann.

Erfindungsgemäß umfasst die Anreicherungsvorrichtung eine Steuereinheit zum Erkennen des Vorliegens eines Anreicherungskriteriums und einen elektrischen Aktuator, um den Anteil des durch die Boil-Off-Leitung zuströmenden Mediums im Verhältnis zu dem durch die Luftzufuhrleitung zuströmenden Medium am Katalysator temporär zu erhöhen und nicht mehr zu erhöhen.

Erfindungsgemäß ist vorgesehen ein Boil-Off-Managementsystem mit einer Anreicherungsvorrichtung auszustatten, die temporär den Anteil des abzulassenden und am Katalysator umzusetzenden Mediums, insbesondere Wasserstoff, erhöhen kann, so dass es während dem Vorliegen von widrigen Umständen am Katalysator, insbesondere während bzw. direkt nach dem Hochlauf des Boil-Off-Managementsystems, zu einem höheren Wasserstoffgehalt und einer geringeren Luftzahl am Katalysator kommt. Wenn die Bedingungen besser sind, zum Beispiel die Temperatur am Katalysator gestiegen ist, können diese Maßnahmen beendet werden, so dass wieder das im Regelbetrieb übliche Verhältnis zwischen Wasserstoff und Luft bzw. die übliche Luftzahl vorliegt.

Dadurch wird auch bei schwierigen Bedingungen eine gute katalytische Umsetzung des abzugebenden Mediums, insbesondere Wasserstoff, ermöglicht. Dies geschieht durch zeitlich begrenzte Erhöhung der H2-Konzentration im Bereich des Katalysators. Beispielsweise kann somit das Startverhaltens des Katalysators, bevorzugt ohne zusätzlichen Energiebedarf, beschleunigt oder verbessert werden.

Der Katalysator dient dabei zur katalytischen Umsetzung des aus dem Kryotank abgelassenen Mediums, insbesondere Wasserstoff, bevorzugt mit Luft bzw. Sauerstoff aus der Umgebung.

Weiterbildungen der Erfindung sind in den abhängigen Ansprüchen, der Beschreibung sowie den beigefügten Zeichnungen angegeben.

Vorzugsweise ist die Anreicherungsvorrichtung so ausgebildet, dass der Anteil des durch die Boil-Off-Leitung zuströmenden Mediums im Verhältnis zu dem durch die Luftzufuhrleitung zuströmenden Medium am Katalysator erhöht wird bei Vorliegen eines Anreicherungskriteriums, nämlich nach einem Startvorgang des Boil-Off-Managementsystems und/oder bei Vorliegen einer Beeinträchtigung am Katalysator, wie einer niedrigen Temperatur und/oder hohen Luftfeuchtigkeit und/oder einer Verschlechterung des chemischen Zustands des Katalysators, zum Beispiel wegen Alterung.

Vorzugsweise ist die Anreicherungsvorrichtung so ausgebildet, dass der Anteil des durch die Boil-Off-Leitung zuströmenden Mediums im Verhältnis zu dem durch die Luftzufuhrleitung zuströmenden Medium am Katalysator nicht erhöht wird, wenn ein Anreicherungskriterium nicht oder nicht mehr vorliegt, insbesondere bei Erreichen der Betriebstemperatur des Katalysators.

Gemäß einer bevorzugten Ausführungsform wird die Anreicherungs-vorrichtung mechanisch, bei Vorliegen eines bestimmten Druckes oder einer bestimmten Temperatur, derart aktiviert, dass der Anteil des durch die Boil-Off-Leitung zuströmenden Mediums im Verhältnis zu dem durch die Luftzufuhrleitung zuströmenden Medium am Katalysator erhöht wird und/oder es wird die Anreicherungsvorrichtung mechanisch, bei Vorliegen eines bestimmten Druckes oder einer bestimmten Temperatur, derart deaktiviert, dass der Anteil des durch die Boil-Off-Leitung zuströmenden Mediums im Verhältnis zu dem durch die Luftzufuhrleitung zuströmenden Medium am Katalysator nicht erhöht wird.

Bevorzugt arbeitet die Anreicherungsvorrichtung passiv. Bevorzugt erfolgt eine Optimierung des Startverhaltens des BOMS ohne zusätzliche aktive Komponenten, mit zusätzlichem Energiebedarf. Eine Beschleunigung des Startverhaltens des Katalysators erfolgt bevorzugt ohne zusätzlichen Energiebedarf.

Bevorzugt umfasst die Anreicherungsvorrichtung einen Verschluss an der Luftzufuhrleitung, insbesondere eine Klappe, einen Deckel oder Lamellen, so dass bei ganz oder teilweise verschlossenem Verschluss, die Luftzufuhr an der Luftzufuhrleitung verhindert oder verringert wird.

Beispielsweise wird bei einem Start des BOMS ein geschlossener oder teilweise geöffneter und/oder geschlitzter beweglicher Verschluss, zum Beispiel Klappe, Deckel, Lamellen, optional geteilt in mehrere Öffnungsstufen, verwendet. Durch die Drosselung der Zuluft wird die Luftzahl bis zum Start der Katalyse reduziert. Nach Start der Umsetzung des Wasserstoffs und der damit einhergehenden Temperaturerhöhung des Katalysators kann die Drossel beispielsweise elektrisch aktuiert oder mechanisch mittels Bi-Metall oder Öldruck oder dergleichen geöffnet werden.

Bevorzugt umfasst die Anreicherungsvorrichtung einen Verschluss am Auslass, insbesondere eine Klappe, einen Deckel oder Lamellen, so dass bei ganz oder teilweise verschlossenem Verschluss, ein Entweichen des Mediums nach dem Katalysator verhindert oder verringert wird, so dass dieses zumindest teilweise zum Katalysator zurückgelangen kann bzw. rezirkuliert.

Beispielsweise wird bei einem Start des BOMS ein geschlossener oder teilweise geöffneter und/oder geschlitzter beweglicher Verschluss, zum Beispiel Klappe, Deckel, Lamellen, optional geteilt in mehrere Öffnungsstufen, verwendet. Durch die Drosselung des Abgasstroms am Auslass der Abgase, beispielsweise in einem Kamin, wird die Luftzahl bis zum Start der Katalyse reduziert. Durch den teilweisen oder vollständigen Verschluss des Ablasses, insbesondere des Kamins, wird nicht umgesetzter Wasserstoff teilweise wieder zum Katalysator rückgeführt. Nach Start der Umsetzung des Wasserstoffs öffnet der Verschluss durch den Impuls des Abgasstrom. Nach Beendigung der Wasserstoffumsetzung schließt der Verschluss selbstständig. Bei Bedarf kann der Verschluss bei hohen Temperaturen im BOMS und/oder dem Abgas elektrisch aktuiert oder mechanisch mittels Bi-Metall oder Öldruck oder dergleichen geöffnet werden.

Bevorzugt umfasst die Anreicherungsvorrichtung eine Düse, wobei die Düse dazu eingerichtet ist, dass durch die Boil-Off-Leitung zuströmende Medium am Katalysator oder vor dem Katalysator zuzuführen, insbesondere einzuspritzen.

Vorzugsweise wird ein reaktives Fluid, bevorzugt Wasserstoff, bevorzugt aus dem Kryotank, aber optional auch aus einem separaten Behälter entnommen, über eine Leitung und Düse direkt dem Katalysator oder dem zuströmenden Luft-H2-Gemisch zugeführt und damit die Luftzahl am Katalysator zumindest lokal begrenzt gesenkt.

Die Leitung zur Versorgung der Einspritzung kann beispielsweise durch Bi-Metall oder Öldruck bei Erreichen der Betriebstemperatur des Katalysators selbstständig geschlossen werden.

Ein erfindungsgemäßes Boil-Off-Managementsystem bzw. eine erfindungsgemäße Kryotankvorrichtung kann auch eine beliebige Kombination von zwei oder mehreren der oben genannten Anreicherungsvorrichtungen umfassen, beispielsweise einen Verschluss in der Luftzufuhrleitung und einen weiteren Verschluss am Auslass.

Eine erfindungsgemäße Kryotankvorrichtung umfasst einen Kryotank und ein Boil-Off-Managementsystem wie zuvor beschrieben, wobei die Boil-Off-Leitung des Boil-Off-Managementsystems mit dem Kryotank fluidverbunden ist, so dass bei geöffnetem Boil-Off Ventil ein Fluid, insbesondere Wasserstoff, aus dem Kryotank zur Mischkammer und weiter zum Katalysator des BOMS strömen kann.

In einem erfindungsgemäßen Verfahren zum Betreiben eines Boil-Off-Managementsystems wird der Anteil des durch die Boil-Off-Leitung zuströmenden Mediums im Verhältnis zu dem durch die Luftzufuhrleitung zuströmenden Medium, am Katalysator, bei Vorliegen eines Anreicherungskriteriums, nämlich nach einem Startvorgang des Boil-Off-Managementsystems und/oder bei Vorliegen einer Beeinträchtigung am Katalysator, wie einer niedrigen Temperatur und/oder hohen Luftfeuchtigkeit und/oder einer Verschlechterung des chemischen Zustands des Katalysators, zum Beispiel wegen Alterung, erhöht und/oder bei einem Wegfall des Anreicherungskriteriums nicht mehr erhöht. Die Anreicherung mit Wasserstoff bzw. die Reduzierung der Luftzahl wird somit bevorzugt reduziert, wenn beispielsweise der Katalysator eine vorbestimmte Temperatur erreicht hat.

Bevorzugt wird ein Verschluss an der Luftzufuhrleitung und/oder ein Verschluss am Auslass ganz oder teilweise geöffnet und/oder das durch die Boil-Off-Leitung zuströmende Medium am Katalysator oder vor dem Katalysator nicht mehr mittels einer Düse zugeführt, wenn ein Anreicherungskriterium nicht mehr vorliegt, insbesondere wenn eine vorbestimmte Temperatur am Katalysator erreicht wird.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines erfindungsgemäßen Boil-Off-Managementsystems in einer ersten Ausführungsform.
- Fig. 2: ist eine schematische Schnittansicht eines erfindungsgemäßen Boil-Off-Managementsystems in einer zweiten Ausführungsform.
- Fig. 3: ist eine schematische Schnittansicht eines erfindungsgemäßen Boil-Off-Managementsystems in einer dritten Ausführungsform.

### Detaillierte Beschreibung der Erfindung

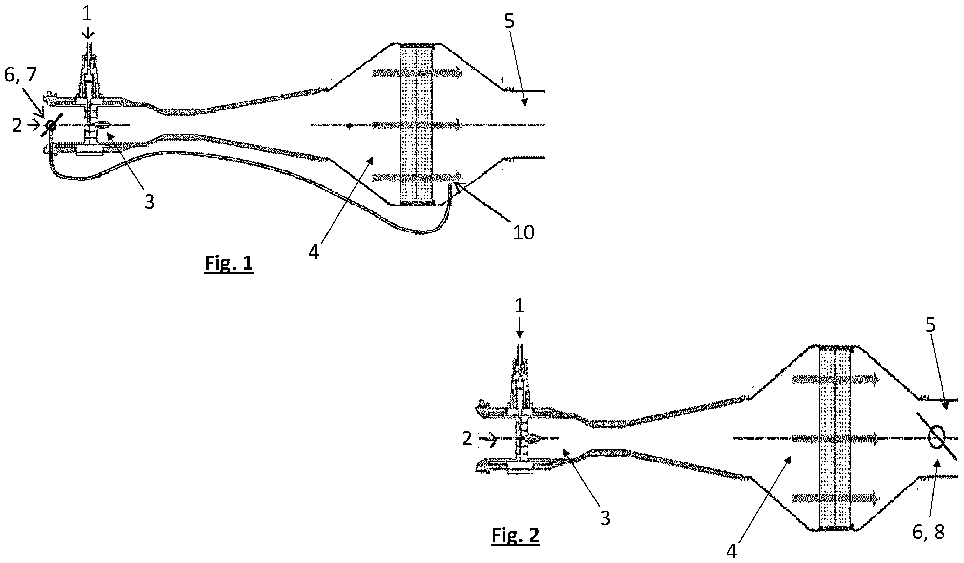

In Fig. 1 ist ein erfindungsgemäßes Boil-Off-Managementsystem in einer ersten Ausführungsform dargestellt.

Das Boil-Off-Managementsystem eines hier nicht dargestellten Kryotanks umfasst eine mit einem Kryotank fluidverbindbare Boil-Off-Leitung 1, die über ein Boil-Off-Ventil mit dem Kryotank verbunden ist. Bei geöffnetem Boil-Off Ventil strömt Wasserstoff durch die Boil-Off-Leitung 1.

Das Boil-Off-Managementsystem umfasst auch eine Luftzufuhrleitung 2, durch welche Frischluft zuführbar ist und in einer Mischkammer 3 mit dem Wasserstoff aus der Boil-Off-Leitung 1 vermischbar ist.

Der Mischkammer 3 in Strömungsrichtung nachgeschaltet ist ein Katalysator 4, zur katalytischen Umsetzung des Wasserstoffs mit dem Luft-Sauerstoff, vor einem nachgeschalteten Auslass 5, zur Abgabe des Mediums nach dem Katalysator in die Umgebung eines Kraftfahrzeuges. Im Katalysator 4 ist die übliche Strömungsrichtung des abzugebenden Gasgemisches mit Pfeilen dargestellt.

Das Boil-Off-Managementsystem umfasst eine Anreicherungsvorrichtung 6, wobei durch die Anreicherungsvorrichtung 6 der Anteil des durch die Boil-Off-Leitung 1 zuströmenden Mediums im Verhältnis, zu dem durch die Luftzufuhrleitung 2 zuströmenden Medium am Katalysator 4 temporär erhöht werden kann.

Die Anreicherungsvorrichtung 6 wird in Fig. 1 durch einen Verschluss 7, nämlich eine Klappe, an der Luftzufuhrleitung 2 gebildet. Bei ganz oder teilweise verschlossenem Verschluss 7 wird somit die Luftzufuhr an der Luftzufuhrleitung 2 verhindert oder verringert. Der Verschluss 7 kann beispielsweise mechanisch mit einem Thermostat 10 verbunden sein und abhängig von der Temperatur am Thermostat öffnen oder schließen.

Beispielsweise ist bei einem Start des BOMS der Verschluss 7 geschlossen. Durch die Drosselung der Zuluft wird die Luftzahl bis zum Start der Katalyse reduziert. Nach Start der Umsetzung des Wasserstoffs und der damit einhergehenden Temperaturerhöhung des Katalysators 4 kann die Drossel, nämlich der Verschluss 7, beispielsweise elektrisch aktuiert oder mechanisch beispielsweise mittels Bi-Metall oder Öldruck oder dergleichen geöffnet werden.

In der Variante der Fig. 2 wird die Anreicherungsvorrichtung 6 durch einen Verschluss 8 im Auslass 5 gebildet, nämlich eine bewegliche, insbesondere schwenkbare Klappe, so dass bei ganz oder teilweise verschlossenem Verschluss 8, ein Entweichen des Mediums nach dem Katalysator 4 verhindert oder verringert wird, so dass dieses zumindest teilweise zum Katalysator 4 zurückgeführt wird.

Beispielsweise wird bei einem Start des BOMS ein geschlossener oder teilweise geöffneter und/oder geschlitzter beweglicher Verschluss 8, zum Beispiel Klappe, verwendet. Durch die Drosselung des Abgasstroms am Auslass 5, beispielsweise in einem Kamin, wird die Luftzahl bis zum Start der Katalyse reduziert. Durch den teilweisen oder vollständigen Verschluss des Auslasses, insbesondere des Kamins, wird nicht umgesetzter Wasserstoff teilweise wieder zum Katalysator 4 rückgeführt. Nach Start der Umsetzung des Wasserstoffs öffnet der Verschluss 8 durch den Impuls des Abgasstrom. Nach Beendigung der Wasserstoffumsetzung schließt der Verschluss 8 selbstständig. Bei Bedarf kann der Verschluss 8 bei hohen Temperaturen im BOMS und/oder dem Abgas elektrisch aktuiert oder mechanisch mittels Bi-Metall oder Öldruck oder dergleichen geöffnet werden.

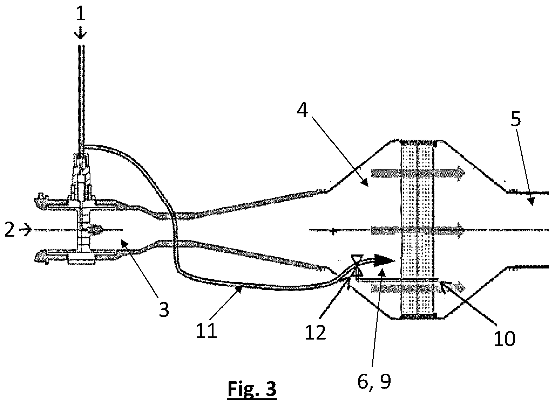

In der Ausführungsform gemäß Fig. 3 wird die Anreicherungsvorrichtung 6 durch eine Düse 9 gebildet, mit welcher das durch die Boil-Off-Leitung 1 zuströmende Medium in den Katalysator 4 oder vor den Katalysator 4 zugeführt, insbesondere eingespritzt werden kann. Die Düse 9 ist über eine Zuführleitung 11 beispielsweise mit der Boil-Off-Leitung 1 strömungsverbunden und weist ein Ventil 12 vor der Düse 9 auf, um die Einspritzung des Wasserstoffs bei geöffnetem Ventil 12 zu ermöglichen und bei geschlossenem Ventil 12 zu verhindern. Das Ventil 12 kann wieder über ein Thermostat 10 beispielsweise mechanisch geöffnet und geschlossen werden.

Vorzugsweise wird ein reaktives Fluid, bevorzugt Wasserstoff, bevorzugt aus dem Kryotank, aber optional auch aus einem separaten Behälter entnommen, über die Zuführleitung 11 und die Düse 9 direkt dem Katalysator 4 oder dem zuströmenden Luft-H2-Gemisch zugeführt und damit die Luftzahl am Katalysator 4 zumindest lokal begrenzt gesenkt.

Die Zuführleitung 11 zur Versorgung der Einspritzung, bzw. das dafür eingerichtete Ventil 12, kann beispielsweise durch Bi-Metall oder Öldruck bei Erreichen der Betriebstemperatur des Katalysators 4 selbstständig geschlossen werden.

### Bezugszeichenliste

- 1: Boil-Off-Leitung
- 2: Luftzufuhrleitung
- 3: Mischkammer
- 4: Katalysator
- 5: Auslass
- 6: Anreicherungsvorrichtung
- 7: Verschluss an der Luftzufuhrleitung
- 8: Verschluss am Auslass
- 9: Düse
- 10: Thermostat
- 11: Zuführleitung
- 12: Ventil

## Patentansprüche

1. Boil-Off-Managementsystem für einen Kryotank, umfassend eine mit einem Kryotank fluidverbindbare Boil-Off-Leitung (1) mit einem Boil-Off-Ventil, sowie eine Luftzufuhrleitung (2) und eine Mischkammer (3) zur Mischung des durch die Boil-Off-Leitung (1) zuströmenden Mediums, insbesondere Wasserstoff, mit dem durch die Luftzufuhrleitung (2) zuströmenden Medium, insbesondere Luft und/oder Sauerstoff, sowie einen der Mischkammer (3) nachgeschalteten Katalysator (4) und einen dem Katalysator (4) nachgeschalteten Auslass (5),
wobei das Boil-Off-Managementsystem zumindest eine Anreicherungsvorrichtung (6) umfasst, wobei durch die Anreicherungsvorrichtung (6) der Anteil des durch die Boil-Off-Leitung (1) zuströmenden Mediums im Verhältnis zu dem durch die Luftzufuhrleitung (2) zuströmenden Medium, am Katalysator (4), temporär erhöht werden kann, **dadurch gekennzeichnet, dass** die Anreicherungsvorrichtung (6) eine Steuereinheit umfasst zum Erkennen des Vorliegens eines Anreicherungskriteriums und einen elektrischen Aktuator, um den Anteil des durch die Boil-Off-Leitung (1) zuströmenden Mediums im Verhältnis zu dem durch die Luftzufuhrleitung (2) zuströmenden Medium am Katalysator (4) temporär zu erhöhen und nicht mehr zu erhöhen.

2. Boil-Off-Managementsystem nach Anspruch 1,
**dadurch gekennzeichnet, dass** die Anreicherungsvorrichtung (6) so ausgebildet ist, dass der Anteil des durch die Boil-Off-Leitung (1) zuströmenden Mediums im Verhältnis zu dem durch die Luftzufuhrleitung (2) zuströmenden Medium am Katalysator (4) erhöht wird bei Vorliegen eines Anreicherungskriteriums, nämlich nach einem Startvorgang des Boil-Off-Managementsystems und/oder bei Vorliegen einer Beeinträchtigung am Katalysator (4), wie einer niedrigen Temperatur und/oder hohen Luftfeuchtigkeit und/oder einer Verschlechterung des chemischen Zustands des Katalysators (4), zum Beispiel wegen Alterung.

3. Boil-Off-Managementsystem nach zumindest einem der vorhergehenden Ansprüche,
**dadurch gekennzeichnet, dass** die Anreicherungsvorrichtung (6) mechanisch, bei Vorliegen eines bestimmten Druckes oder einer bestimmten Temperatur, derart aktiviert wird, dass der Anteil des durch die Boil-Off-Leitung (1) zuströmenden Mediums im Verhältnis zu dem durch die Luftzufuhrleitung (2) zuströmenden Medium am Katalysator (4) erhöht wird und/oder dass die Anreicherungsvorrichtung (6) mechanisch, bei Vorliegen eines bestimmten Druckes oder einer bestimmten Temperatur, derart deaktiviert wird, dass der Anteil des durch die Boil-Off-Leitung (1) zuströmenden Mediums im Verhältnis zu dem durch die Luftzufuhrleitung (2) zuströmenden Medium am Katalysator (4) nicht erhöht wird.

4. Boil-Off-Managementsystem nach zumindest einem der vorhergehenden Ansprüche,
**dadurch gekennzeichnet, dass** die Anreicherungsvorrichtung (6) einen Verschluss (7) an der Luftzufuhrleitung (2) umfasst, insbesondere eine Klappe, einen Deckel oder Lamellen, so dass bei ganz oder teilweise verschlossenem Verschluss (7), die Luftzufuhr an der Luftzufuhrleitung (2) verhindert oder verringert wird.

5. Boil-Off-Managementsystem nach zumindest einem der vorhergehenden Ansprüche,
**dadurch gekennzeichnet , dass** die Anreicherungsvorrichtung (6) einen Verschluss (8) am Auslass (5) umfasst, insbesondere eine Klappe, einen Deckel oder Lamellen, so dass bei ganz oder teilweise verschlossenem Verschluss (8), ein Entweichen des Mediums nach dem Katalysator (4) verhindert oder verringert wird, so dass dieses zumindest teilweise zum Katalysator (4) zurückgelangen kann.

6. Boil-Off-Managementsystem nach zumindest einem der vorhergehenden Ansprüche,
**dadurch gekennzeichnet , dass** die Anreicherungsvorrichtung (6) eine Düse (9) umfasst, wobei die Düse (9) dazu eingerichtet ist, das durch die Boil-Off-Leitung (1) zuströmende Medium am Katalysator (4) oder vor dem Katalysator (4) zuzuführen, insbesondere einzuspritzen.

7. Kryotankvorrichtung umfassend einen Kryotank und ein Boil-Off-Managementsystem nach zumindest einem der vorhergehenden Ansprüche, wobei die Boil-Off-Leitung (1) des Boil-Off-Managementsystems mit dem Kryotank fluidverbunden ist.

8. Verfahren zum Betreiben eines Boil-Off-Managementsystems nach zumindest einem der Ansprüche 1 bis 6,
**dadurch gekennzeichnet , dass** der Anteil des durch die Boil-Off-Leitung (1) zuströmenden Mediums im Verhältnis zu dem durch die Luftzufuhrleitung (2) zuströmenden Medium, am Katalysator (4), bei Vorliegen eines Anreicherungskriteriums, nämlich nach einem Startvorgang des Boil-Off-Managementsystems und/oder bei Vorliegen einer Beeinträchtigung am Katalysator (4), wie einer niedrigen Temperatur und/oder hohen Luftfeuchtigkeit und/oder einer Verschlechterung des chemischen Zustands des Katalysators (4), zum Beispiel wegen Alterung, erhöht wird und/oder bei einem Wegfall des Anreicherungskriteriums nicht mehr erhöht wird.

9. Verfahren nach Anspruch 8,
**dadurch gekennzeichnet , dass** ein Verschluss (7) an der Luftzufuhrleitung (2) und/oder ein Verschluss (8) am Auslass (5) ganz oder teilweise geöffnet wird und/oder das durch die Boil-Off-Leitung (1) zuströmende Medium am Katalysator (4) oder vor dem Katalysator (4) nicht mehr mittels einer Düse (9) zugeführt wird, wenn ein Anreicherungskriterium nicht mehr vorliegt, insbesondere wenn eine vorbestimmte Temperatur am Katalysator (4) erreicht wird.

## Claims

1. Boil-off management system for a cryotank, comprising a boil-off conduit (1) which is fluidically connectable to a cryotank and has a boil-off valve, and an air feed conduit (2) and a mixing chamber (3) for mixing the medium flowing in through the boil-off conduit (1), especially hydrogen, with the medium flowing in through the air feed conduit (2), especially air and/or oxygen, and a catalytic converter (4) downstream of the mixing chamber (3) and an outlet (5) downstream of the catalytic converter (4),
**wherein** the boil-off management system comprises at least one enrichment apparatus (6), wherein the enrichment apparatus (6) can temporarily increase the proportion of the medium flowing in through the boil-off conduit (1) in relation to the medium flowing in through the air feed conduit (2) at the catalytic converter (4),
**characterized in that** the enrichment apparatus (6) comprises a control unit for recognizing the existence of an enrichment criterion and an electrical actuator in order to temporarily increase and to stop increasing the proportion of the medium flowing in through the boil-off conduit (1) in relation to the medium flowing in through the air feed conduit (2) at the catalytic converter (4).

2. Boil-off management system according to Claim 1,
**characterized in that** the enrichment apparatus (6) is designed such that the proportion of the medium flowing in through the boil-off conduit (1) in relation to the medium flowing in through the air feed conduit (2) at the catalytic converter (4) is increased in the case of existence of an enrichment criterion, namely after a startup operation of the boil-off management system and/or in the case of existence of an impairment to the catalytic converter (4), such as a low temperature and/or high humidity and/or a deterioration in the chemical condition of the catalytic converter (4), for example owing to ageing.

3. Boil-off management system according to at least one of the preceding claims,
**characterized in that** the enrichment apparatus (6) is activated mechanically in the event of existence of a particular pressure or a particular temperature in such a way that the proportion of the medium flowing in through the boil-off conduit (1) is increased in relation to the medium flowing in through the air feed conduit (2) at the catalytic converter (4) and/or **in that** the enrichment apparatus (6) is deactivated mechanically in the event of existence of a particular pressure or a particular temperature in such a way that the proportion of the medium flowing in through the boil-off conduit (1) is not increased in relation to the medium flowing in through the air feed conduit (2) at the catalytic converter (4).

4. Boil-off management system according to at least one of the preceding claims,
**characterized in that** the enrichment apparatus (6) comprises a closure (7) on the air feed conduit (2), especially a flap, a lid or lamellas, such that the air feed in the air feed conduit (2) is stopped or reduced when the closure (7) is wholly or partly closed.

5. Boil-off management system according to at least one of the preceding claims,
**characterized in that** the enrichment apparatus (6) comprises a closure (8) at the outlet (5), especially a flap, a lid or lamellas, such that, when the closure (8) is wholly or partly closed, escape of the medium downstream of the catalytic converter (4) is prevented or reduced, such that it can at least partly return to the catalytic converter (4).

6. Boil-off management system according to at least one of the preceding claims,
**characterized in that** the enrichment apparatus (6) comprises a nozzle (9), where the nozzle (9) is set up to feed, especially spray in, the medium flowing in through the boil-off conduit (1) at the catalytic converter (4) or upstream of the catalytic converter (4).

7. Cryotank apparatus comprising a cryotank and a boil-off management system according to at least one of the preceding claims, wherein the boil-off conduit (1) of the boil-off management system is fluidically connected to the cryotank.

8. Method of operating a boil-off management system according to at least one of Claims 1 to 6,
**characterized in that** the proportion of the medium flowing in through the boil-off conduit (1) in relation to the medium flowing in through the air feed conduit (2) at the catalytic converter (4), in the case of existence of an enrichment criterion, namely after a startup operation of the boil-off management system, and/or in the case of existence of an impairment at the catalytic converter (4), such as a low temperature and/or high humidity and/or deterioration of the chemical condition of the catalytic converter (4), for example owing to ageing, is increased and/or, in the case that the enrichment criterion no longer applies, is no longer increased.

9. Method according to Claim 8,
**characterized in that** a closure (7) in the air feed conduit (2) and/or a closure (8) at the outlet (5) is wholly or partly opened and/or the medium flowing in through the boil-off conduit (1) is no longer supplied by means of a nozzle (9) at the catalytic converter (4) or upstream of the catalytic converter (4) when an enrichment criterion no longer exists, especially when a predetermined temperature at the catalytic converter (4) is attained.

## Revendications

1. Système de gestion de l'évaporation pour un réservoir cryogénique, comprenant une conduite d'évaporation (1) pouvant être reliée fluidiquement à un réservoir cryogénique, avec une soupape d'évaporation, ainsi qu'une conduite d'amenée d'air (2) et une chambre de mélange (3) pour mélanger le fluide arrivant par la conduite d'évaporation (1), notamment de l'hydrogène, avec le fluide arrivant par la conduite d'amenée d'air (2), notamment de l'air et/ou de l'oxygène, ainsi qu'un catalyseur (4) placé en aval de la chambre de mélange (3) et une sortie (5) placée en aval du catalyseur (4),
le système de gestion de l'évaporation comprenant au moins un dispositif d'enrichissement (6), le dispositif d'enrichissement (6) permettant d'augmenter temporairement la proportion du fluide arrivant par la conduite d'évaporation (1) par rapport au fluide arrivant par la conduite d'amenée d'air (2) au niveau du catalyseur (4), **caractérisé en ce que** le dispositif d'enrichissement (6) comprend une unité de commande pour détecter la présence d'un critère d'enrichissement et un actionneur électrique pour augmenter temporairement et ne plus augmenter la proportion du fluide arrivant par la conduite d'évaporation (1) par rapport au fluide arrivant par la conduite d'amenée d'air (2) au niveau du catalyseur (4).

2. Système de gestion de l'évaporation selon la revendication 1, **caractérisé en ce que** le dispositif d'enrichissement (6) est configuré de telle sorte que la proportion du fluide arrivant par la conduite d'évaporation (1) par rapport au fluide arrivant par la conduite d'amenée d'air (2) au niveau du catalyseur (4) est augmentée en présence d'un critère d'enrichissement, à savoir après une opération de démarrage du système de gestion de l'évaporation et/ou en présence d'une perturbation au niveau du catalyseur (4), telle qu'une température basse et/ou une humidité de l'air élevée et/ou une détérioration de l'état chimique du catalyseur (4), par exemple en raison du vieillissement.

3. Système de gestion de l'évaporation selon au moins l'une quelconque des revendications précédentes, **caractérisé en ce que** le dispositif d'enrichissement (6) est activé mécaniquement en présence d'une certaine pression ou d'une certaine température de telle sorte que la proportion du fluide arrivant par la conduite d'évaporation (1) est augmentée par rapport au fluide arrivant par la conduite d'amenée d'air (2) au niveau du catalyseur (4) et/ou en ce que le dispositif d'enrichissement (6) est désactivé mécaniquement en présence d'une certaine pression ou d'une certaine température de telle sorte que la proportion du fluide arrivant par la conduite d'évaporation (1) n'est pas augmentée par rapport au fluide arrivant par la conduite d'amenée d'air (2) au niveau du catalyseur (4).

4. Système de gestion de l'évaporation selon au moins l'une quelconque des revendications précédentes, **caractérisé en ce que** le dispositif d'enrichissement (6) comprend un obturateur (7) sur la conduite d'amenée d'air (2), notamment un clapet, un couvercle ou des lamelles, de telle sorte que lorsque l'obturateur (7) est totalement ou partiellement fermé, l'amenée d'air sur la conduite d'amenée d'air (2) est empêchée ou réduite.

5. Système de gestion de l'évaporation selon au moins l'une quelconque des revendications précédentes, **caractérisé en ce que** le dispositif d'enrichissement (6) comprend un obturateur (8) sur la sortie (5), notamment un clapet, un couvercle ou des lamelles, de telle sorte que, lorsque l'obturateur (8) est totalement ou partiellement fermé, une évacuation du fluide après le catalyseur (4) est empêchée ou réduite, de telle sorte que celui-ci peut retourner au moins partiellement vers le catalyseur (4).

6. Système de gestion de l'évaporation selon au moins l'une quelconque des revendications précédentes, **caractérisé en ce que** le dispositif d'enrichissement (6) comprend une buse (9), la buse (9) étant adaptée pour amener, notamment injecter, le fluide arrivant par la conduite d'évaporation (1) au niveau du catalyseur (4) ou avant le catalyseur (4).

7. Dispositif de réservoir cryogénique comprenant un réservoir cryogénique et un système de gestion de l'évaporation selon au moins l'une quelconque des revendications précédentes, dans lequel la conduite d'évaporation (1) du système de gestion de l'évaporation est reliée fluidiquement au réservoir cryogénique.

8. Procédé d'exploitation d'un système de gestion de l'évaporation selon au moins l'une quelconque des revendications 1 à 6, **caractérisé en ce que** la proportion du fluide arrivant par la conduite d'évaporation (1) par rapport au fluide arrivant par la conduite d'amenée d'air (2) au niveau du catalyseur (4) est augmentée en présence d'un critère d'enrichissement, à savoir après une opération de démarrage du système de gestion de l'évaporation et/ou en présence d'une perturbation au niveau du catalyseur (4), telle qu'une température basse et/ou une humidité de l'air élevée et/ou une détérioration de l'état chimique du catalyseur (4), par exemple en raison du vieillissement, et/ou n'est plus augmenté lorsque le critère d'enrichissement disparaît.

9. Procédé selon la revendication 8, **caractérisé en ce qu'**un obturateur (7) sur la conduite d'amenée d'air (2) et/ou un obturateur (8) sur la sortie (5) est totalement ou partiellement ouvert et/ou le fluide arrivant par la conduite d'évaporation (1) n'est plus amené au niveau du catalyseur (4) ou avant le catalyseur (4) au moyen d'une buse (9), lorsqu'un critère d'enrichissement n'est plus présent, notamment lorsqu'une température prédéterminée est atteinte au niveau du catalyseur (4).
